# EUROPÄISCHE PATENTANMELDUNG

(11) **EP 4 015 424 A1**
(43) Veröffentlichungstag der Anmeldung: **22.06.2022**
(21) Anmeldenummer: 21215236.7
(22) Anmeldetag: 16.12.2021
(51) Int. Cl.: B65G 65/46, B01D 21/24, B30B 9/16, C02F 11/12, B01D 21/00, B07B 1/04, B65G 33/14, B65G 33/18

(54) **BUNKER MIT AUSTRAGSVORRICHTUNG**

(30) Priorität: 17.12.2020 DE 202020107371 U
(71) Anmelder: Groffmann, Christoph, 29646 Bispingen (DE); Groffmann, Nikolas, 29646 Bispingen (DE)
(72) Erfinder: Groffmann, Christoph, 29646 Bispingen (DE); Groffmann, Nikolas, 29646 Bispingen (DE)
(74) Vertreter: Müller Schupfner & Partner Patent- und Rechtsanwaltspartnerschaft mbB

(57) **Zusammenfassung**

Bunker (2) mit Austragsvorrichtung (1), wobei im oder am Boden (3) des Bunkers (2) angeordnet als Teil der Austragsvorrichtung (1) eine Doppelschnecke (4) mit zwei Schneckenwellen (5, 5') vorgesehen ist und die Schneckenwellen (5, 5') jeweils mit Paddeln oder jeweils einer Wendel (6, 6') versehen sind, die Schneckenwellen (5, 5') in einem Trog (7) geführt sind und der Trog (7) längs eines ersten Streckenabschnitts (8) der Schneckenwellen (5, 5') nach oben offenen ist, zur Aufnahme von Fördergut aus dem Bunker (2) und in einem zweiten Streckenabschnitt (9) der Schneckenwellen (5, 5') der Trog (7) geschlossen ist und am Ende des zweiten Streckenabschnitts (9) ein Fremdkörperabscheider (10) mit Sieb (11) vorgesehen ist, wobei die Paddel bzw. die Wendeln (6, 6') der beiden Schneckenwellen (5, 5') jeweils ineinander kämmend ausgeführt sind und die Schneckenwellen (5, 5') im entgegengesetzten Drehsinn antreibbar sind, um das Fördergut vom Bunker (2) entlang des Troges (7) zu fördern und durch das Sieb (10) zu pressen.

## Beschreibung

Die vorliegende Erfindung betrifft einen Bunker mit Austragsvorrichtung. Der Bunker dient der Aufnahme eines Fördergutes und weist einen Fremdkörperabscheider und, im oder am Boden des Bunkers angeordnet, eine Doppelschnecke auf, beides als Teil der Austragsvorrichtung. Die Erfindung betrifft weiterhin ein Verfahren zum Austrag eines Fördergutes unter Abscheidung von Fremdkörpern in dem Fremdkörperabscheider.

### Stand der Technik

Bunker mit Austragsvorrichtung sind bekannt. Nach einer typischen Ausgestaltung weisen solche Bunker auf dem Bunkerboden eine Austragsöffnung mit darunter angeordneter Rinne und eine in dieser Rinne geführte Förderschnecke als Austragsvorrichtung auf. Die Förderschnecken solcher Austragsvorrichtungen sind i.d.R. als Einwellenwellenschnecke in Form einer archimedischen Schraube ausgeführt. Derartige Förderschnecken sind nicht geeignet, die für die Zwecke dieser Erfindung notwendigen Förderdrücke am Ende der Förderschnecke aufzubauen.

Aus der DE 3906253 A1 ist ein Bunker mit einem beweglichen Austragrahmen bekannt. In dem Bunkerboden ist eine Austragöffnung angeordnet, die über einen Schacht mit einem Schneckengehäuse verbunden ist, in dem zwei gegenläufig arbeitende, gesondert angetriebene parallele Schnecken mit variierender Schneckensteigung angeordnet sind. Der hin- und her fahrende Austragrahmen fördert das Schüttgut im Bunker in Richtung auf die Austragöffnung. Die Schnecken weisen keinen geschlossenen Schneckengehäusebereich auf. Auch findet sich am Ende des Förderweges kein Fremdkörperabscheider.

Weiterhin sind Vorpressschnecken, ausgeführt als kämmende Doppelschnecken, für die Befüllung von Kolbenpumpen bekannt.

Häufig ergibt sich die Aufgabe, Störstoffe in Form von grobem und festem Material mit Durchmessern bzw. eine längste Ausdehnung von z.B. größer 1 cm, insbesondere größer 4 cm, oder sogar größer 10 cm (in Bezug auf die jeweils längste Ausdehnung) aus dem Fördergut abzuscheiden. Solche Störstoffe gelangen i.d.R. ungewünscht in den Bunker.

Störstoffabscheider, auch Fremdkörperabscheider genannt, werden zum Schutz der weiteren Anlage vor Fremdkörpern, insbesondere nachgeschalteten Pumpen, wie Excenter- oder Kolbenpumpen, eingesetzt. Der Fremdkörperabscheider trennt harte und stückige Gegenstände aus dem Fördergut und verhindert, dass die weitere Anlage durch diese harten Gegenstände beschädigt wird und zum Stillstand kommt.

Insbesondere wenn das Fördergut ein Klärschlamm ist, sind Fremdkörper in der Praxis eine häufige Ursache von teuren Anlagenstillständen in nachgeordneten Verfahrensstufen oder sogar Anlass für Reparaturen.

Der Einsatz vorgeschalteter Fremdkörperabscheider ist somit immer dann, wenn die Belastung mit Störstoffen wahrscheinlich ist, zwingend für die Betriebssicherheit der Gesamtanlage, ist aber auch schon dann angezeigt, wenn das Fördergut normalerweise keine solchen Störstoffe enthält, aber die Herkunft des Fördergutes unbekannt ist und sich damit ggf. nur eine geringe, aber nicht völlig unerhebliche Wahrscheinlichkeit für derartige Störstoffe ergibt.

Es sind bereits Fremdkörperabscheider vorgeschlagen worden, in denen entwässerter Klärschlamm von oben auf zwei gegenläufig drehende Walzen aufgegeben wird. Durch den einstellbaren Spalt zwischen den Walzen können Schlamm und Feststoffe mit einer Partikelgröße unterhalb des Walzenspalts den Abscheider passieren. Eine der beiden Walzen weist eine gröbere Struktur auf, z.B. eine spiralförmig angeordnete Nut im Walzenumfang. Größere Feststoffe werden durch diese Walzen in Richtung des Störstoffabwurfs gefördert und dort abgeschieden. Von dort können diese über eine seitlich angeordnete Rutsche, z.B. in einen Sammelbehälter, abgeschieden werden. Der störstoffbefreite Schlamm wird in einem Abwurfschacht unterhalb des Spaltes zum weiteren Transport oder für etwaige andere Verfahrensoperationen bereitgestellt. Nachteil der bekannten Methode ist, dass eine separate Vorrichtung zur Entfernung der Störstoffe vorzusehen ist, die in das bestehende kontinuierlich geführte Verfahren zu intergieren ist und z.B. auf den Stoffmengentransport der Gesamtanlage einzustellen ist.

Weiterhin sind kontinuierlich arbeitende Vorrichtungen zum Entwässern von mit einem Flockungshilfsmittel versetzten Klärschlamms mit einer angetriebenen Förderschnecke bekannt, die in einem teilweise offenen Trog geführt sind, wobei die Trogöffnung in Form einer Siebwandung ausgeführt ist. Die Siebwandung ist Teil der äußeren Wandung des Troges und der Schlamm wird längs des Förderweges komprimiert und an der Siebwandung vorbeigefördert. Der Schlamm soll aber nicht durch die Siebwandung hindurchtreten, sondern nur die im Schlamm enthaltene Flüssigkeit entwässern. Ein Beispiel hierfür ist aus der EP 0413940 A2 bekannt. Weitere Beispiele sind:
Die DE 602005001538 T2 (entspricht der EP 1640051 B1) betrifft einen Feststoff/Flüssigkeitsseparator mit einer Doppelschnecke, bei dem Wasser entlang des Umfangs des Schneckengehäuses durch "Filterausgabelücken" im Bereich des Umfangs des Schneckengehäuses abgeschieden wird. Die Aufgabe ist hier das Entwässern längs des Förderweges über Auslässe am Umfang und es fehlt an einem Fremdkörperabscheider.
Die EP 3090868 A1 betrifft eine Schneckenpresse zur Trennung von Gülle in eine flüssige Fraktion und eine feste Fraktion. Die Schneckenpresse umfasst zwei parallel zueinander verlaufende Schnecken zum Transport des Materials. Die Schnecken wirken als Förder- und Pressschnecken und greifen ineinander. Das Gehäuse umfasst einen Siebkorb oder eine Siebtrommel, der bzw. die die Förder- und Pressschnecken zum Zwecke der Verdichtung des Materials umschließt, wobei eine Flüssigkeit abgetrennt wird. Die Schneckenflügel der Förder- und Pressschnecken sind spiegelbildlich ausgerichtet und eine ist linksdrehend und die andere rechtsdrehend ausgeführt. Flüssigkeit wird längs des Umfangs der Schneckenpresse abgegeben. Es ist kein Fremdkörperabscheider vorgesehen. Das Sieb ist auch nicht am Ende des Förderweges angeordnet.

### Aufgabe der vorliegenden Erfindung

Aufgabe der vorliegenden Erfindung ist es, eine Störstoffabscheidung in eine Austragsvorrichtung für eine Bunker so zu integrieren, dass keine separate Vorrichtung für sich genommen betrieben, gesteuert und überwacht werden muss. Die Störstoffabscheidung soll robust sein, apparativ einfach ausgestaltet sein und sich für schwer förderbare Schlämme wie Klärschlämme eignen und einen niedrigen Betriebs- und Wartungsaufwand verursachen.

### Zusammenfassung der Erfindung

Die vorliegende Erfindung ist durch den Gegenstand des Anspruches 1 beschrieben. Vorteilhafte Ausführungsformen sind Gegenstand der Unteransprüche oder nachfolgend beschrieben.

Der Bunker weist eine Austragsvorrichtung auf, wobei im oder am Boden des Bunkers angeordnet als Teil der Austragsvorrichtung eine Doppelschnecke mit zwei Schneckenwellen vorgesehen ist und die Schneckenwellen jeweils mit Paddeln oder jeweils einer Wendel versehen sind, die Schneckenwellen in einem Trog geführt sind und der Trog längs eines ersten Streckenabschnitts der Schneckenwellen nach oben offenen ist, zur Aufnahme von Fördergut aus dem Bunker und in einem zweiten Streckenabschnitt der Schneckenwellen der Trog geschlossen ist und am Ende des zweiten Streckenabschnitts ein Fremdkörperabscheider mit Sieb vorgesehen ist, wobei die Paddel bzw. die Wendeln der beiden Schneckenwellen jeweils ineinander kämmend ausgeführt sind und die Schneckenwellen im entgegengesetzten Drehsinn antreibbar sind, um das Fördergut vom Bunker entlang des Troges zu fördern und durch das Sieb zu pressen. Die Fremdkörper in Form fester stückiger Störstoffe werden so auf dem Sieb bzw. in dem Siebkorb abgeschieden.

Der Bunker ist ein Behältnis, das der zumindest vorübergehenden Lagerung und dem Sammeln des Fördergutes dient und seitliche Wandungen bereitstellt, zur Herstellung einer gewissen Füllhöhe des Fördergutes, und eine unten im oder am Boden befindliche Auslassöffnung, um das Fördergut einer Doppelschnecke zuzuführen. Vorzugsweise ist der Bunker nach oben offen, so dass er mit einem LKW mit Schütte diskontinuierlich beschickt werden kann. Der Bunker, wenn er von oben befüllt wird, kann auch als Silo bezeichnet werden. Insbesondere wenn der Bunker von oben befüllt wird, mit Hilfe von LKWs mit Schütte (Muldenkipper), wird dieser als Annahmesilo bezeichnet. Der Bunker kann einen rechteckigen oder runden Querschnitt aufweisen.

Im oder am Boden des Bunkers kann ein sogenannter Schubboden vorgesehen sein. Hierzu sind unmittelbar über oder auf dem Bunkerboden verschiebbare, langgestreckte Austragsschieber vorgesehen, welche auf der zur Auftragsöffnung gerichteten Längsseite Mitnehmersprossen aufweisen, mit steil zum Bunkerboden gerichteten Mitnehmerflächen und auf der gegenüber liegenden Längsseite Flächen, die mit einem spitzen Winkel zum Bunkerboden angeordnet sind. Die Rückseite der Mitnehmersprossen weist somit ein Profil auf, dass beim Rückschub ohne nennenswerte Förderwirkung durch das Gut zurückgeführt werden kann.

Die Mitnehmersprossen von beidseitig der Bodenöffnung angeordneten Schubleitern weisen entgegengesetzte Neigung auf, so dass das Gut von beiden Seiten her in die gleiche Bodenöffnung geschoben wird. Bei einem runden Silo kann der Schubboden auch als Gleitrahmen bezeichnet werden.

Die Bodenöffnung, nachfolgend auch als Auslassöffnung des Bunkers bezeichnet, hat häufig eine langgestreckte Form, wie diese sich durch eine nach oben offene Rinne ergibt. Der Vorteil dieser Schubböden liegt darin, dass von der in dem Bunker gespeicherten Säule an Fördergut möglichst gleichförmig über den ganzen Bunkerquerschnitt das Fördergut ausgetragen wird, so dass das Fördergut mehr oder weniger gleichförmig nachbrechen oder nachsinken kann. Ein Beispiel hierfür ist in der DE 2400547 A1 offenbart.

Die Auslassöffnung des Bunkers weist insbesondere eine Rechtecksform auf, wie diese sich durch einen nach oben offenen Trog in Rohrform ergibt. In dem Trog läuft die Doppelschnecke.

Das Fördergut ist ein Fließgut. Dazu zählen Schüttgüter wie Kies, Sand und Split, pastöse Massen und Flüssigkeiten. Das Fließgut liegt z.B. in Form von schwer fließendem, körnigem, hochviskosem und/oder pastösem Fördergut vor, wie Müll, Kies, Mahlgut, Schlämmen, wie Flusssedimenten oder Klärschlamm, Filterpresskuchen, wie Trester, Melasse, Stoffsuspensionen, z.B. aus der Fest-Flüssigtrennung, Biomassematerialien für oder aus Biomasseverwertungsanlagen, wie Biogasanlagen, Silage, Presslingen, Holzspänen, Hackschnitzel oder dergleichen. Insbesondere ist das Fördergut ein Schlamm und ganz besonders bevorzugt ein zumindest teilentwässerter Klärschlamm.

Die Austragsvorrichtung ist unter dem Bunker angeordnet und umfasst eine Doppelschnecke, die ineinander kämmend in einem Trog geführt ist, und einen Fremdstoffabscheider mit Sieb. Der Trog ist im Bereich einer Einlauföffnung geöffnet und im weiteren Streckenverlauf allseits umlaufend geschlossen, um einen Förderdruck im Fördergut aufzubauen, insbesondere für den Durchgang durch das Sieb im Fremdstoffabscheider.

Die Doppelschnecke ist in einen Trog geführt. Der Trog hat damit im Querschnitt insbesondere eine ovale Form oder die Form einer liegenden zusammengeschobenen "8".

Das Fördergut wird von der Auslassöffnung im Bunkerboden, der die Einlauföffnung für die Doppelschnecke darstellt, ausgeführt in der Form einer Öffnung des Troges über eine erste Wegstrecke der beiden Schneckenwellen bis zum Auslauf in den integrierten Fremdkörperabscheider am Ende der zweiten Wegstrecke der beiden Schneckenwellen gefördert. Die Schneckenwellen sind mit Wendeln als Förderglieder besetzt. Die Wendeln können als einzelne Paddel ausgebildet sein, sind aber vorzugsweise als eine sich vom Anfang bis zum Ende erstreckende helikale Wendel ausgebildet. Am Ende der zweiten Wegstrecke in Förderrichtung meint, dass das Fördergut in Bezug auf den Förderweg das letzte Paddel oder die letzten Paddel bzw. das Ende der Wendeln bereits passiert hat, bevor das Fördergut das Sieb passiert. Insbesondere ist der Fremdstoffabscheider mit Sieb erst hinter dem Auslauf der Doppelschnecke angeordnet.

Das Fördergut wird von den beiden synchron drehenden Schneckenwendeln der Doppelschnecke innerhalb des geschlossenen Trogabschnittes - d.h. über eine zweite Wegstrecke der beiden Schneckenwellen - geschoben. Dabei ist ein hoher Füllgrad von größer 95 Vol.% in der zweiten Wegstrecke erwünscht. Beide Schneckenwellen haben eine entgegengesetzte Drehrichtung und eine unterschiedliche Stellung der Paddel (spiegelbildlich) bzw. unterschiedliche Wendelung der jeweiligen helikalen Wendel, z.B. ist die eine Wendel der Schneckenwelle linksdrehend und die andere Wendel rechtsdrehend fest auf der Welle angeordnet.

Die Schneckenwendeln sind ineinander kämmend angeordnet und erzeugen im geschlossenen Bereich des Troges (zweite Wegstrecke) einen Druck von z.B. ca. 0,5 bis ca. 2 bar. Ein Druck von zumindest 0,5 bar ist vorteilhaft, um das Fördergut bis in den Bereich des Auslaufs der Doppelschnecke durch den Siebboden des Fremdkörperabscheiders (Sieb) zu pressen.

Die Synchronübersetzung aus der Antriebswelle auf die beiden getriebenen Schneckenwellen kann z.B. über ein Einfachgetriebe erfolgen. Antriebsseitig werden für die Schneckenwellen z.B. Wälzlager eingesetzt. Die gegenüberliegende Seite der jeweiligen Welle kann z.B. mit einem Gleitlager ausgestattet sein. Dabei sind die Schneckenwellen z.B. über separate Kupplungen mit dem Verteilgetriebe verbunden. Die Schneckenwellen können auch über einen Aufsteckgetriebemotor oder einen Getriebemotor mit zusätzlichen Kettentrieb angetrieben sein. Die Antriebseinheit findet sich vorzugsweise an dem einen - dem der Einlauföffnung für die Doppelschnecke zugewandten - Ende und der Fremdkörperabscheider am anderen Ende der Schneckenwelle.

Die Rotation der Schneckenwelle kann über einen induktiven Näherungsschalter hinsichtlich der Drehüberwachung überwacht werden, der z.B. auf der getriebenen Welle auf der Motorseite der Schnecke installiert ist.

Der Fremdkörperabscheider weist ein Sieb auf, und ist nach einer Ausführungsform Teil des Gehäuses der Doppelschnecke und findet sich am Ende der Schneckenwellen der Doppelschnecke, dort wo die Doppelschnecke in einer Druckkammer ausläuft. Die Druckkammer ist vorzugsweise noch Teil des Troges, in dem die Schneckenwellen laufen, dort wo diese am Ende vorzugsweise keine Wendeln mehr aufweisen. Insbesondere setzt sich der Trog nach unten fort und erweitert so die Druckkammer nach unten. Stauglied für die Druckkammer ist der Siebboden eines Siebes am Ende der Druckkammer. Die Druckkammer kann am Ende eine Prallfläche aufweisen, die z.B. in einem Winkel von 30 bis 60° zur Ebene der beiden Schneckenwellen steht. Hierdurch wird der Strom des Fördergutes effektiv nach unten in die Druckkammer abgeleitet.

Der Siebboden ist in die Förderstrecke eingebaut und das Fördergut wird durch das Sieb bzw. den Siebboden gepresst. Das Sieb kann z.B. als Lochplatte oder auch als Siebkorb mit Siebboden ausgebildet sein. Der Siebboden kann in der Druckkammer auch schräg stehen, um die Störstoffe am tiefsten Punkt des Siebbodens zu sammeln. Der Lochdurchmesser der Lochplatte bzw. die Maschenweite des Siebes beträgt z.B. 1 bis 10 cm, insbesondere zwischen 4 und 8 cm.

Es ist auch möglich, das Sieb bzw. den Siebboden durch einen Mitnehmer an zumindest einer der Schneckenwellen in eine Pendel- oder Rüttelbewegung während des Betriebes zu versetzen. Weiterhin kann die Drehbewegung der Schneckenwellen nach entsprechender Umlenkung genutzt werden, einen Abtreifer auf dem Siebboden als Siebhilfe drehen zu lassen.

Auf den Fremdkörperabscheider kann ein Aufhängevorrichtung montiert sein, zum einfacheren Handling des Siebkorbes, insbesondere wenn dieser angehoben und ausgeschüttet werden soll.

Der Druck in der Druckkammer wird mit einem Drucksensor überwacht. Bei einem Druckanstieg auf z.B. ca. 2 bar wird die Schnecke abgeschaltet und es wird angezeigt, dass der Fremdkörperabscheider gereinigt werden muss. Dies kann z.B. erfolgen, in dem der Siebkorb, aufweisend den Siebboden, herausgenommen und entleert wird. Die Fremdkörper bzw. die festen stückigen Störstoffen sind i.d.R. Festkörper, wie Steine, Holz oder Baustoffe, insbesondere mit einem Durchmesser von 1 bis 10 cm oder 4 cm und größer.

Der Fördergut tritt nach dem Durchgang durch das Sieb durch die Austrittsöffnung des Fremdkörperabscheiders aus und kann dann z.B. einer Kolben- oder Excenterpumpe zum weiteren Transport zugeführt werden.

Gegenstand der Erfindung ist auch ein Verfahren zum Entfernen von Störstoffen aus Fördergut in Bunkern, insbesondere in Form von Schlamm, mit der oben beschriebenen Vorrichtung.

### Detaillierte Beschreibung der Erfindung

Die Erfindung wird anhand eines Ausführungsbeispiels erläutert. Es zeigen:
Fig. 1 die Austragsvorrichtung in einer Seitenansicht;
Fig. 2 die Austragsvorrichtung in einer Aufsicht;
Fig. 3 die Austragsvorrichtung der Figur 3 im Schnitt entlang der Linie BB; und
Fig. 4 einen Bunker mit der Austragsvorrichtung und einem Schubboden.

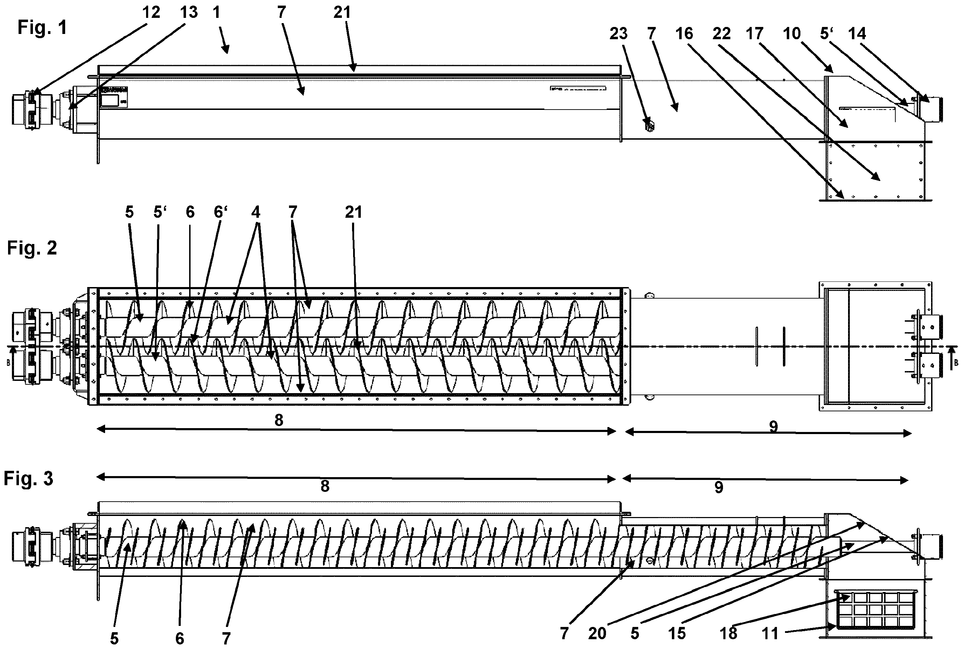

**Fig. 1** zeigt die Austragsvorrichtung 1. In einem Trog 7 sind links und rechts (bezogen auf die Draufsicht in Förderrichtung) zwei Schneckenwellen 5, 5' angeordnet, die jeweils mit einem Antrieb bzw. einem Getriebe 12 versehen sind und antriebsseitig in einem Wälzlager 13 und auf der anderen Seite in einem Gleitlager 14 geführt sind. Der Antrieb kann als Aufsteckgetriebemotor (nicht gezeigt) ausgeführt werden. Das Gleitlager 14 ist im Bereich des Fremdkörperabscheiders 10 angeordnet.

**Fig. 2** zeigt die Austragsvorrichtung 1 der Fig. 1 von oben. Die Schneckenwellen 5, 5' verlaufen parallel und sind jeweils mit einer Wendel 6, 6' versehen, wobei die Wendeln 6,6' sich gegenläufig um die Schneckenwellen 5, 5' helikal herumwinden und ineinander kämmend ausgeführt sind. Im Förderbetrieb laufen die Schneckenwellen 5, 5' jeweils im entgegengesetzten Drehsinn. Die Schneckenwellen 5, 5' bilden zusammen mit den Wendeln 6, 6' eine Doppelschnecke 4. Der Trog 7 ist im Schnitt (nicht gezeigt) wie eine liegende gestauchte 8 ausgebildet und in einem ersten Streckenabschnitt 8 der Schneckenwellen 5, 5' geöffnet und weist dort eine über der Austragsöffnung des Troges 7 angeordnete Einlauföffnung 21 auf. Der Trog 7 ist in einem zweiten Streckenabschnitt 9 geschlossen. Dort befindet sich ein Spülstutzen 23 für die Reinigung.

**Fig. 3** zeigt die Austragsvorrichtung 1 der Fig. 1 im Schnitt entlang der Linie BB und damit in Förderrichtung gesehen den linken Teil der Austragsvorrichtung 1. In der Schnittdarstellung wird der Fremdkörperabscheider 10 mit dem Sieb 11, das als Siebkorb ausgeführt ist, sichtbar. Das Fördergut wird von der Doppelschnecke 4 im Bereich des geschlossenen Troges (zweiter Streckenabschnitt 9) zwangsgefördert und es baut sich so ein gewisser Druck in der Druckkammer 17 des Fremdkörperabscheiders 10 auf. Das Ende des Troges 7 bildet den oberen Teil der Druckkammer 17. Im Bereich der Druckkammer 17 haben die Schneckenwellen keine umlaufende Wendel mehr. Die Druckkammer 17 nimmt weiterhin den Siebkorb 18 auf. Stauglied für das Fördergut ist der Siebboden des Siebkorbes 18.

Durch die Prallfläche 15 wird das Fördergut in der Druckkammer 17 nach unten geführt.

Ein Drucksensor 20 nimmt den Druck in der Druckkammer 17 auf und signalisiert, wann der Siebkorb 18 zu entleeren ist. Hierzu wird eine Klappe in einer Seitenwand 22 am Fremdkörperabscheider 10 geöffnet und der Siebkorb 18 herausgenommen und entleert. Überschreitet der durch den Drucksensor 20 gemessene Druck einen Grenzwert, kann diese Information auch genutzt werden, den Antrieb 12 der Doppelschnecke 4 abzustellen.

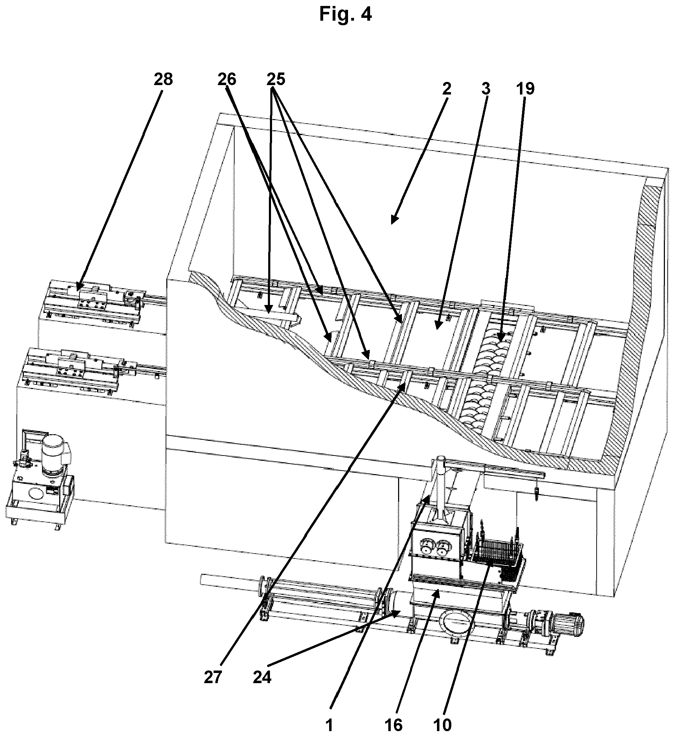

In **Fig. 4** ist der nach oben offene Bunker 2 dargestellt, hier versehen mit einem Schubboden 25. Der Bunker kann z.B. mit LKWs beschickt werden und ist hierzu mit der einen Seite an der Oberkannte bodennah in das Gelände eingebaut. In dem Boden 3 des Bunkers 2 befindet sich etwa in der Mitte eine rechteckige Auslassöffnung 19, dergestalt, dass diese gleichzeitig die Einlauföffnung 21 in den Trog 7 im Bereich des ersten Streckenabschnitts 8 der Schneckenwellen 5, 5' darstellt, dort wo der Trog 7 nach oben offen ist. Unter dem Boden des Bunkers 2 befindet sich die Austragsvorrichtung 1 mit dem Fremdkörperabscheider 10. Das durch die Austrittsöffnung geförderte Fördergut hat das in dem Fremdkörperabscheider 10 befindliche Sieb passiert und tritt an der Austrittsöffnung 16 aus dem Fremdkörperabscheider 10 aus, um dann weiter gefördert zu werden, z.B. wie hier gezeigt mit einer Exzenterpumpe 24.

Auf dem Boden des Bunkers 1 ist ein Schubboden 25 mit zwei unmittelbar über Bunkerboden 3 gleitenden Austragsschiebern 26, welche auf der zur Auftragsöffnung gerichteten Längsseite mehrere Mitnehmersprossen 27 mit steil zum Bunkerboden 3 gerichteten Mitnehmerflächen aufweisen und auf der gegenüber liegenden Längsseite Flächen, die mit einem spitzen Winkel zum Bunkerboden 3 angeordnet sind. Die Austragsschieber werden von zwei Hydraulikzylindern 28 mit einem Hub von 1 m hin- und hergefahren, auch über die rechteckige Auslassöffnung 19 hinweg.

## Patentansprüche

1. Bunker (2) mit Austragsvorrichtung (1), wobei im oder am Boden (3) des Bunkers (2) angeordnet als Teil der Austragsvorrichtung (1) eine Doppelschnecke (4) mit zwei Schneckenwellen (5, 5') vorgesehen ist und die Schneckenwellen (5, 5') jeweils mit Paddeln oder jeweils einer Wendel (6, 6') versehen sind, die Schneckenwellen (5, 5') in einem Trog (7) geführt sind und der Trog (7) längs eines ersten Streckenabschnitts (8) der Schneckenwellen (5, 5') nach oben offenen ist, zur Aufnahme von Fördergut aus dem Bunker (2) und in einem zweiten Streckenabschnitt (9) der Schneckenwellen (5, 5') der Trog (7) geschlossen ist und am Ende des zweiten Streckenabschnitts (9) ein Fremdkörperabscheider (10) mit Sieb (11) vorgesehen ist, wobei die Paddel bzw. die Wendeln (6, 6') der beiden Schneckenwellen (5, 5') jeweils ineinander kämmend ausgeführt sind und die Schneckenwellen (5, 5') im entgegengesetzten Drehsinn antreibbar sind, um das Fördergut vom Bunker (2) entlang des Troges (7) zu fördern und durch das Sieb (10) zu pressen.

2. Bunker nach Anspruch 1, wobei der Bunker (2) eine Auslassöffnung (19) aufweist, zum Transport des Fördergutes durch die Auslassöffnung (19) in eine Einlauföffnung (21) der Doppelschnecke (4) im Bereich des ersten Streckenabschnitts (8), wobei sich die Auslassöffnung (19) des Bunkers durch den nach oben offenen Trog (7) ergibt.

3. Bunker nach Anspruch 1 oder 2, wobei das Fördergut ein Schlamm ist, insbesondere ein Biomassematerial für oder aus einer Biomasseverwertungsanlage, ein Flusssediment oder ein Klärschlamm, vorzugsweise jeweils teilentwässert.

4. Bunker nach zumindest einem der vorhergehenden Ansprüche, wobei die Doppelschnecke (4) zwei Schneckenwellen (6, 6') mit jeweils einer helikalen Wendel aufweist, wobei die Wendeln in Form jeweils einer Helix auf der Schneckenwelle fest angeordnet sind und die beiden Helices einen gegenläufigen Drehsinn haben, vorzugsweise zumindest über die Länge des ersten und zweiten Streckenabschnitts (8, 9).

5. Bunker nach zumindest einem der vorhergehenden Ansprüche, wobei das Sieb (10) als Lochblech oder Siebboden, bevorzugt als Siebkorb, ausgeführt ist.

6. Bunker nach zumindest einem der vorhergehenden Ansprüche, wobei im Fremdkörperabscheider (10) ein Drucksensor (20) angeordnet ist, der bei Überschreiten eines ersten Schwellenwertes signalisiert, dass das Sieb zu reinigen bzw. der Siebkorb zu entleeren ist und ggf. bei Überschreiten eines zweiten Schwellenwertes den Antrieb der Schneckenwellen (5,5') stoppt.

7. Bunker nach zumindest einem der vorhergehenden Ansprüche, wobei im oder am Boden (3) des Bunkers (2) ein hin- und herfahrender Schubboden (25) vorgesehen ist, zur Unterstützung der Förderung des Bunkerinhalts zur bzw. durch die Auslassöffnung (19).

8. Verwendung des Bunkers (2) mit Austragsvorrichtung (1) nach zumindest einem der vorhergehenden Ansprüche zum Entfernen von festen stückigen Störstoffen aus dem Fördergut, wobei die durch das Sieb (10) entfernbaren Störstoffe vorzugsweise eine längste Ausdehnung von größer 10 cm, insbesondere größer 4 cm oder sogar nur größer 1 cm haben.

9. Verwendung nach Anspruch 8, wobei das Fördergut ein Schlamm ist, insbesondere ein Biomassematerial für oder aus einer Biomasseverwertungsanlage, ein Flusssediment oder ein Klärschlamm, vorzugsweise jeweils teilentwässert.

10. Verfahren zum Fördern eines Fördergutes aus einem Bunker (2) mit einer Austragsvorrichtung (1), wobei im oder am Boden (3) des Bunkers (2) als Teil der Austragsvorrichtung (1) eine Doppelschnecke (4) mit zwei Schneckenwellen (5, 5') vorgesehen ist und die Schneckenwellen (5, 5') jeweils mit Paddeln oder jeweils einer Wendel (6, 6') versehen sind, die Schneckenwellen (5, 5') in einem Trog (7) geführt sind und der Trog (7) längs eines ersten Streckenabschnitts (8) der Schneckenwellen (5, 5') nach oben offenen ist, zur Aufnahme von Fördergut aus dem Bunker (2) und in einem zweiten Streckenabschnitt (9) der Schneckenwellen (5, 5') der Trog (7) geschlossen ist zum Fördern des Fördergutes unter Druckaufbau und am Ende des zweiten Streckenabschnitts (9) ein Fremdkörperabscheider (10) mit Sieb (11) vorgesehen ist, wobei die Paddel bzw. die Wendeln (6, 6') der beiden Schneckenwellen (5, 5') jeweils ineinander kämmend ausgeführt sind und die Schneckenwellen (5, 5') im entgegengesetzten Drehsinn rotieren, um das Fördergut vom Bunker (2) entlang des Troges (7) zu fördern und durch das Sieb (10) zu pressen und hierbei Fremdkörper in Form von festen stückigen Störstoffen im Fördergut auf oder in dem Sieb abzuscheiden.

11. Verfahren nach Anspruch 10, wobei der Bunker (2), das Fördergut, der Störstoff und/oder die Austragsvorrichtung (1) weiter durch einen der Ansprüche 2 bis 9 gekennzeichnet sind.

12. Verfahren nach Anspruch 10 oder 11, wobei das Fördergut am Ende der Schneckenwellen der Doppelschnecke in einer Druckkammer (17) transportiert wird, dort wo die Schneckenwellen (5) am Ende vorzugsweise keine Wendeln (6) oder Paddel mehr aufweisen.

13. Verfahren nach Anspruch 12, wobei die Druckkammer (17) eine Prallfläche (15) aufweist, vorzugsweise mit einem Winkel von 30 bis 60° zur Ebene der beiden Schneckenwellen, um den Strom des Fördergutes nach unten in der Drucckammer (15) abzuleiten.

14. Verfahren nach Anspruch 12 oder 13, wobei das Sieb (11) als Siebkorb ausgebildet ist und der Siebkorb aus der Druckkammer (17) über eine seitliche Klappe zur Entleerung des Siebkorbs von harten Fremdkörpern herausnehmbar ist.

15. Bunker nach zumindest einem der Ansprüche 10 bis 14, wobei das Fördergut ein Schlamm ist, insbesondere ein Biomassematerial für oder aus einer Biomasseverwertungsanlage, ein Flusssediment oder ein Klärschlamm, vorzugsweise jeweils teilentwässert.
